# EUROPÄISCHE PATENTSCHRIFT

(11) **EP 3 497 890 B1**
(45) Veröffentlichungstag und Bekanntmachung des Hinweises auf die Patenterteilung: **20.11.2019**
(21) Anmeldenummer: 17768752.2
(22) Anmeldetag: 14.09.2017
(51) Int. Cl.: H04L 12/40, H04L 12/863, H04L 12/873, H04L 12/861, H04L 12/815, H04L 12/851

(54) **VERFAHREN ZUM ÜBERTRAGEN VON NACHRICHTEN ZWISCHEN STEUERGERÄTEN EINES KRAFTFAHRZEUGS SOWIE SWITCHVORRICHTUNG UND KRAFTFAHRZEUG**
METHOD FOR TRANSMITTING MESSAGES BETWEEN CONTROLLERS OF A MOTOR VEHICLE, AND SWITCH APPARATUS AND MOTOR VEHICLE
PROCÉDÉ DE TRANSMISSION DE MESSAGES ENTRE DES APPAREILS DE COMMANDE D'UN VÉHICULE À MOTEUR AINSI QUE DISPOSITIF DE COMMUTATION ET VÉHICULE À MOTEUR

(30) Priorität: 28.11.2016 DE 102016223533
(43) Veröffentlichungstag der Anmeldung: 19.06.2019
(73) Patentinhaber: Audi AG, 85045 Ingolstadt (DE)
(72) Erfinder: SCHMIDT, Karsten, 85051 Ingolstadt (DE); KERK, Daniel, 90408 Nürnberg (DE); REIMANN, Felix, 90408 Nürnberg (DE); TRÖGER, Peter, 14467 Potsdam (DE)
(86) Internationale Anmeldenummer: PCT/EP2017/073087
(87) Internationale Veröffentlichungsnummer: WO 2018/095604

(56) Entgegenhaltungen:
- US-A1- 2007 116 025
- US-B1- 6 388 993
- US-B1- 6 798 743

## Beschreibung

Die Erfindung betrifft ein Verfahren zum Übertragen von Nachrichten zwischen Steuergeräten eines Kraftfahrzeugs. Die Nachrichten werden als Datenpakete über ein Datennetzwerk übertragen, in welchem zumindest eine Switchvorrichtung (Switch) die Nachrichten weiterleitet oder zuordnet. Zu der Erfindung gehören auch die besagte Switchvorrichtung sowie das Kraftfahrzeug mit dem Datennetzwerk.

In einem Kraftfahrzeug wird in der Regel an das Datennetzwerk eine Anforderung in Bezug auf das zeitliche Verhalten gestellt, um für bestimmte Nachrichten, beispielsweise eines sicherheitsrelevanten Fahrerassistenzsystems, eine maximale Übertragungsdauer zu begrenzen. Hierzu sind zeitgesteuerte Ansätze in Form von Datenbussen, wie FlexRay oder das TTEthernet oder TTP, bekannt. Diese beruhen auf einem zeitgesteuerten Sendeplan oder Ablaufplan, der in alle beteiligten Steuergeräte implementiert werden muss. Dies resultiert aber darin, dass das gesamte Datennetzwerk auf einem globalen statischen Ablaufplan (Schedule) beruht, der eine Anpassung für alle Steuergeräte erfordert, falls ein neues Steuergerät nachgerüstet werden soll.

Aus der DE 103 09 164 A1 ist ein Verfahren zum Bereitstellen eines Ablaufplans in einem sogenannten geschalteten Netzwerk (Switched Network) bekannt. In Echtzeit zu übertragende Datentelegramme werden getrennt von anderen Datentelegrammen übertragen. Dies bedeutet aber, dass während der Übertragung der anderen Datentelegramme die Echtzeit-Datentelegramme warten müssen.

Aus der DE 10 2011 076 357 A1 ist für ein Flugzeug ein Datennetzwerk bekannt, in welchem Daten mit Prioritäten versehen werden, um hierdurch das Weiterleiten von besonders wichtigen Daten zu bevorzugen. Dies kann aber nicht verhindern, dass ein Steuergerät mit einer Vielzahl von unwichtigen Datenpaketen weiterhin den Datenverkehr im Netzwerk behindern kann.

Aus der DE 10 2007 061 986 A1 ist ein Verfahren bekannt, um paketbasierten Datenverkehr auch in einem zeitgesteuerten Bussystem, wie zum Beispiel dem FlexRay-Bus, bereitstellen zu können.

Aus der WO 2010/136023 A1 ist ein Verfahren zum Optimieren einer paketbasierten Datenübertragung bekannt. Datenpakete werden hier mit einer Priorität versehen, um sie im lokalen Ethernet-Netzwerk in der Reihenfolge ihrer Wichtigkeit übertragen zu können. Datenpakete mit einer hohen Priorität können über eine eigene Warteschlange geleitet werden.

Aus der US 2016/294697 A1 sind Systeme und Verfahren zur interferenzabhängigen Netzwerkplanung bekannt.

Aus der DE 10 2012 207952 A1 ist ein Verfahren zur Übertragung von Daten in einem paketorientierten Kommunikationsnetzwerk und ein entsprechend eingerichtetes Teilnehmergerät in dem Kommunikationsnetzwerk bekannt.

Der Erfindung liegt die Aufgabe zugrunde, in einem Datennetzwerk eines Kraftfahrzeugs eine maximale Verzögerung oder Latenz von zumindest einigen der zu übertragenden Nachrichten auf einen vorbestimmten Höchstwert begrenzen zu können.

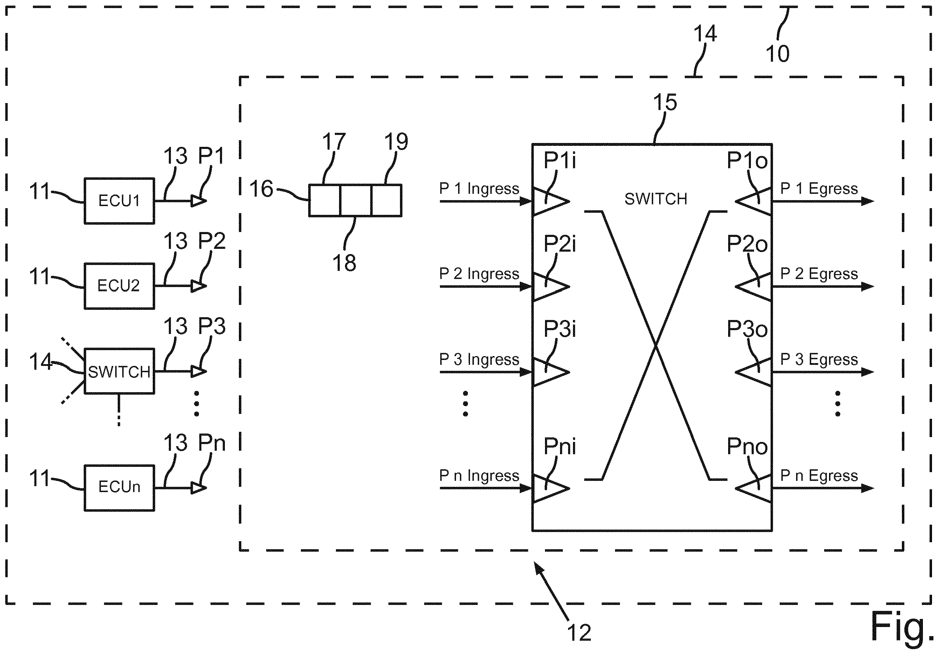

Die Aufgabe wird durch die Gegenstände der unabhängigen Patentansprüche gelöst. Vorteilhafte Weiterbildungen der Erfindung sind durch die abhängigen Patentansprüche, die folgende Beschreibung sowie die Figur beschrieben.

Die Erfindung stellt ein Verfahren bereit, mittels welchem Botschaften oder Nachrichten zwischen Steuergeräten eines Kraftfahrzeugs übertragen werden können. Hierzu wird ein Switch verwendet, der im Folgenden als Switchvorrichtung bezeichnet ist. Eine andere Bezeichnung für eine solche Switchvorrichtung ist auch Datenweiche oder Bridge. Unter einer Nachricht ist im Zusammenhang mit der Erfindung ein Datenpaket zu verstehen, das eine Angabe einer Zieladresse und einer Prioritätsstufe enthält oder aufweist. Die Switchvorrichtung verbindet Netzwerkzweige eines Datennetzwerks, wobei an jedem Netzwerkzweig jeweils entweder ein Steuergerät oder eine weitere Switchvorrichtungen angeschlossen sein kann. Ein Netzwerkzweig kann beispielsweise durch ein Netzwerkkabel oder eine Funkstrecke gebildet sein. Insbesondere ist pro Netzwerkzweit maximal nur ein Steuergerät oder eine weitere Switchvorrichtung vorgesehen. Die Nachrichten der Steuergeräte treffen über einen jeweiligen Netzwerkzweig an einem jeweiligen Eingangsport der Switchvorrichtung ein.

Die Switchvorrichtung kann an einer eintreffenden Nachricht erkennen, wohin die Nachricht weitergeleitet werden soll (angegeben durch die Zieladresse) und (bei entsprechend getaggten Frames) wie wichtig die Nachricht ist, d.h. welche Prioritätsstufe die Nachricht aufweist. Die Erfindung setzt nun nicht dort an, wo es um das Weiterleiten von Nachrichten in Abhängigkeit ihrer Priorität geht, sondern bereits am Eingangsport während des Empfangs jeder Nachricht. Durch die Switchvorrichtung werden pro Eingangsport jeweils für eine der Prioritätsstufen oder aber auch für einige oder alle der Prioritätsstufen jeweils pro vorbestimmter Zeiteinheit jeweils höchstens so viele Nachrichten aufgenommen, dass sie insgesamt einer vorbestimmten Höchstdatenmenge pro Zeiteinheit entsprechen. Für jede Prioritätsstufe wird also höchstens eine Höchstdatenmenge pro Zeiteinheit akzeptiert. Weitere Nachrichten, die innerhalb der Zeiteinheit eintreffen und durch welche die Höchstdatenmenge überschritten würde, werden also abgelehnt. Nur die aufgenommenen Nachrichten werden dann jeweils in Abhängigkeit von ihrer Zieladresse einem Ausgangsport. zugeordnet. An jedem Ausgangsport werden dann die zugeordneten Nachrichten entsprechend ihrer Priorität ausgesendet.

Durch die Erfindung ergibt sich der Vorteil, dass aus einem Netzwerkzweig über die Switchvorrichtung hinweg nicht beliebig viele Nachrichten in andere Netzwerkzweige weitergeleitet werden. Nachrichten einer vorbestimmten Prioritätsstufe können außerhalb des Netzwerkzweigs des sendenden Steuergeräts, jenseits der Switchvorrichtung in anderen Netzwerkzweigen nur so viel Datenverkehr erzeugen, wie es die vorgegebene Höchstdatenmenge pro Zeiteinheit vorgibt oder zulässt. Falls also ein sendendes Steuergerät Nachrichten mit niedriger Prioritätsstufe aussendet, so hat dies nur einen begrenzten Einfluss auf die Datenkommunikation in anderen Netzwerkzweigen des Datennetzwerks. Somit kann es nicht zu einer "Verstopfung" oder Überlastung von Ausgangsports des Switches oder der Switchvorrichtung durch Nachrichten der verschiedenen Prioritätsstufen kommen. Dies garantiert die Zeiteigenschaften (z.B. Latenz).

Zu der Erfindung gehören auch optionale zusätzliche Merkmale, durch die sich zusätzliche Vorteile ergeben.

Durch das Begrenzen der Datenmenge auf höchstens oder maximal die Höchstdatenmenge wird also die Datenrate begrenzt, die in Form von Nachrichten einer jeweiligen Prioritätsstufe über den Eingangsport empfangen oder für eine Weiterleitung akzeptiert wird. Problematisch beim Berechnen der Datenrate kann allerdings sein, dass kurzzeitig innerhalb der Zeiteinheit die Höchstdatenrate überschritten werden kann und sich nur über die gesamte Zeiteinheit hinweg gemittelt dann aber doch nur wieder die zulässige Höchstdatenrate ergibt. Für den Zeitraum des Überschreitens innerhalb der Zeiteinheit sind dann aber unter Umständen andere Nachrichten blockiert. Um dies zu vermeiden, kann vorgesehen sein, an jedem Eingangsport für die Prioritätsstufen jeweils eine Nachrichtenanzahl zu ermitteln und die Anzahl der Nachrichten pro Zeiteinheit zu begrenzen. Die Switchvorrichtung zählt also mit, wie viele Nachrichten der überwachten Prioritätsstufe empfangen werden. Ist die maximale Nachrichtenanzahl erreicht, so werden keine weiteren Nachrichten der Prioritätsstufe für diese Zeiteinheit akzeptiert. Somit kann es also nicht zu einer kurzzeitigen Überschreitung eines zulässigen Mittelwerts kommen.

Die für die Weiterleitung angenommenen Nachrichten werden in der beschriebenen Weise zu dem jeweiligen Ausgangsport geleitet. An dem jeweiligen Ausgangsport werden dann die zugeordneten Nachrichten bevorzugt in der Reihenfolge ihrer Prioritätsstufen ausgesendet. Somit erfolgt das Weiterleiten von Nachrichten ausgehend von der Switchvorrichtung ebenfalls in Abhängigkeit von den Prioritätsstufen. Es wird also eine Sendereihenfolge der Nachrichten gemäß der Priorität festgelegt. Somit wird das Sendeverhalten der Switchvorrichtung ebenfalls durch die Prioritätsstufen gesteuert.

Der Wert der Höchstdatenmenge kann analytisch in Abhängigkeit von gewünschten oder vorgegebenen Übertragungslatenzen festgelegt werden. Hierzu ist nur eine Offline-Berechnung nötig, die aber bedeutend einfacher ist als komplett alles im laufenden Betrieb zu rechnen. Die für zumindest eine Prioritätsstufe festgelegte Höchstdatenmenge kann also in Abhängigkeit von einem Maximalwert einer Übertragungsverzögerung oder -latenz festgelegt werden. Dies ist bei einem Kraftfahrzeug möglich, da die Nachrichten, die von Steuergeräten in einem Kraftfahrzeug erzeugt werden, sogenannte statische Nachrichten sind, d.h. es ist von vornherein aufgrund der Konstruktion des Kraftfahrzeugs bekannt, welches Steuergerät wie viele Nachrichten welchen Nachrichtentyps in welcher Situation erzeugt. Nun kann man für jedes Steuergerät einen Worst-Case in Bezug auf die Anzahl und den Sendezeitpunkt annehmen und dann ausgehend von der höchsten (wichtigsten) Prioritätsstufe ermitteln, wie viele Nachrichten dann zu übermitteln sind, und festlegen, welche Übertragungsverzögerung sich für diese ergeben darf. Daraus folgen dann für die niedrigeren Prioritätsstufen jeweils stufenweise die maximal zulässigen Werte (Maximalwerte) für deren Höchstdatenmenge, wenn die Gesamtdatenmenge, die überhaupt in einer Zeiteinheit von der Switchvorrichtung übertragen werden kann, konstruktionsbedingt vorgegeben ist. Bei der Berechnung sind also für eine Nachricht dabei weniger die niederprioren Nachrichten relevant, sondern insbesondere der Einfluss aller gleich- oder höherprioren Nachrichten (vom gleichen Eingang und von anderen Netzwerkzweigen).

Um eine Manipulation der Prioritätsstufe durch ein Steuergerät zu vermeiden, wird bevorzugt in den Nachrichten die jeweilige Prioritätsstufe durch kryptographisch verschlüsselte Prioritätsdaten angegeben. Durch die Steuervorrichtung werden dann die Prioritätsdaten mittels eines kryptographischen Schlüssels entschlüsselt. Mit anderen Worten kann also das sendende Steuergerät seine Prioritätsstufe selbst eintragen, muss dies aber mittels kryptographisch verschlüsselte Prioritätsdaten tun, die nur dann von der Switchvorrichtung akzeptiert werden, falls der kryptographische Schlüssel der Switchvorrichtung zu den kryptographisch verschlüsselten Prioritätsdaten passt. Hierdurch kann vermieden werden, dass sich ein Steuergerät eigenständig eine höhere Prioritätsstufe für seine Nachrichten verschafft. Nachrichten, deren Prioritätsdaten nicht von der Switchvorrichtung entschlüsselt werden können, werden nämlich verworfen. Zusätzlich oder alternativ dazu kann die Switchvorrichtung intern eine bevorzugt kryptographisch abgesicherte Konfiguration aufweisen, die von außen nicht manipulierbar sein soll. Kommen Nachrichten mit ungültiger Konfiguration am Switch an (also nicht konform zur switch-internen Konfiguration), kann der Switch diese verwerfen und damit das Netzwerk so "sauber halten".

Um zu verhindern, dass Nachrichten gleichzeitig in einem Netzwerkzweig ausgesendet werden sollen und deshalb eine zurückgestellt wird, kann vorgesehen sein, dass sich die Steuergeräte auch untereinander beim Senden von Nachrichten koordinieren. Zumindest zwei der Steuergeräte führen hierzu dann untereinander eine Zeitsynchronisation von jeweiligen Zeitgebern der Steuergeräte durch. Ein solcher Zeitgeber kann beispielsweise eine Uhr oder ein Zähler sein. Die synchronisierten Steuergeräte senden dann Nachrichten zeitversetzt zueinander aus. Das Sendeverhalten der Steuergeräte ist somit verschränkt (insbesondere interlaced), sodass an der Switchvorrichtung abwechselnd (insbesondere einzeln) die Nachrichten beider Steuergeräte kollisionsfrei eintreffen. Insbesondere ist dies vorteilhaft, falls die Nachrichten zumindest eines der beiden Steuergeräte ein Videosignal oder allgemein ein Breitbandsignal darstellen oder transportieren. Unter einem Breitbandsignal wird im Zusammenhang mit der Erfindung ein Signal verstanden, dessen Bandbreite oder Datenrate größer als 10 Prozent, insbesondere größer als 30 oder 40 Prozent, der Netto-Datenrate allgemein des Datennetzwerk und insbesondere des Netzwerkzweigs des Steuergeräts ist. Ein anderes Beispiel für ein Breitbandsignal ist ein Radarsignal.

Es können also beispielsweise zwei Videoströme zweier Steuergeräte ineinander verschränkt durch das abwechselnde Aussenden der Nachrichten beider Steuergeräte über das Datennetzwerk und/oder die Switchvorrichtung übertragen werden.

Indem die Übertragung der Nachrichten zwischen Steuergeräten durch die Switchvorrichtung dahingehend begrenzt wird, dass überschüssige Nachrichten (Überschreitung der Höchstdatenmenge pro Zeiteinheit) durch die Switchvorrichtung ignoriert oder verworfen werden, und die Switchvorrichtung an den Ausgangsports die Nachrichten mit höherer Prioritätsstufe vor Nachrichten mit niedrigerer Prioritätsstufe aussendet, ist kein globaler Schedule oder Ablaufplan nötig, über welchen die Steuergeräte implizit koordiniert werden müssten. Somit senden die Steuergeräte also bevorzugt ihre Nachrichten unabhängig von einem globalen Sendeplan oder Ablaufplan aus, der also für das gesamte Kraftfahrzeug oder dessen Steuergeräte nötig wäre, um Sendezeitpunkte und/oder die Nachrichtenanzahl für jedes Steuergerät festzulegen. Es ist also keine vorherige Abstimmung der Steuergeräte nötig. Somit kann also auch ein Steuergerät nachinstalliert werden, ohne dass eine Anpassung des Sendeverhaltens der anderen Steuergeräte nötig wäre.

Die Erfindung sieht auch die beschriebene Switchvorrichtung für ein Kraftfahrzeug vor. Die erfindungsgemäße Switchvorrichtung weist also Anschlussports zum Anschließen von Netzwerkzweigen eines Datennetzwerks auf. Ein solcher Anschlussport kann also zum elektrischen und mechanischen Verbinden eines Netzwerkkabels eines Netzwerkzweigs ausgestaltet sein. Zumindest einige dieser Anschlussports sind für einen Betrieb als Empfangsport und zumindest einige der Anschlussports sind für einen Betrieb als Sendeport oder Ausgangsport eingerichtet. Dies kann in an sich bekannter Weise vorgesehen sein, indem entsprechende Empfangsschaltungen und/oder Sendeschaltungen für den jeweiligen Anschlussport vorgesehen sind. Bei der erfindungsgemäßen Switchvorrichtung ist des Weiteren eine Prozessoreinrichtung bereitgestellt, die dazu eingerichtet ist, eine Ausführungsform des erfindungsgemäßen Verfahrens durchzuführen. Hierzu kann die Prozessoreinrichtung zumindest einen Mikroprozessor und/oder zumindest einen Mikrocontroller aufweisen. Des Weiteren kann die Prozessoreinrichtung einen Programmcode aufweisen, der dazu eingerichtet ist, bei Ausführen durch die Prozessoreinrichtung die Ausführungsform des erfindungsgemäßen Verfahrens durchzuführen. Der Programmcode kann in einem Datenspeicher der Prozessoreinrichtung gespeichert sein.

Das Kraftfahrzeug, wie es ebenfalls durch die Erfindung bereitgestellt wird, weist ein Datennetzwerk auf, in welchem die Steuergeräte Nachrichten über die erfindungsgemäße Switchvorrichtung austauschen können. Das erfindungsgemäße Kraftfahrzeug weist also eine Switchvorrichtung oder mehrere Switchvorrichtungen auf, über welche jeweils Steuergeräte zum Austauschen von Nachrichten gekoppelt sind. Die zumindest eine Switchvorrichtung ist dabei eine Ausführungsform der erfindungsgemäßen Switchvorrichtung. Zusätzlich oder alternativ dazu kann vorgesehen sein, dass die Steuergeräte dazu eingerichtet sind, ihre Nachrichten synchronisiert zueinander zeitversetzt auszusenden, um hierdurch eine Kollision von Nachrichten-Sendezeitpunkten zu vermeiden. Insgesamt ist somit bei dem erfindungsgemäßen Kraftfahrzeug sichergestellt, dass die Steuergeräte ihre Nachrichten unabhängig von einem globalen Sendeplan oder Ablaufplan aussenden können.

Das erfindungsgemäße Kraftfahrzeug ist bevorzugt als Kraftwagen, insbesondere als Personenkraftwagen oder Lastkraftwagen ausgestaltet.

Im Folgenden ist ein Ausführungsbeispiel der Erfindung beschrieben. Hierzu zeigt die einzige Figur (Fig.) eine schematische Darstellung einer Ausführungsform des erfindungsgemäßen Kraftfahrzeugs.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

Die Figur zeigt ein Kraftfahrzeug 10, bei dem es sich beispielsweise um einen Kraftwagen, insbesondere einen Personenkraftwagen oder Lastkraftwagen, handeln kann. In dem Kraftfahrzeug 10 können Steuergeräte 11 über ein Datennetzwerk 12 miteinander gekoppelt sein. Das Datennetzwerk 12 kann insbesondere ein Ethernet-Netzwerk sein. Das Datennetzwerk 12 kann Netzwerkzweige 13 aufweisen, von denen jeder beispielsweise durch ein Netzwerkkabel gebildet sein kann. Des Weiteren können die Netzwerkzweige 13 über Switchvorrichtungen 14 zu dem Datennetzwerk 12 verschaltet oder verknüpft sein. Von den Switchvorrichtungen 14 ist eine vergrößert dargestellt, um den Aufbau der Switchvorrichtung 14 zu veranschaulichen. Die Switchvorrichtung 14 kann in an sich bekannter Weise Anschlussports P1, P2, P3, ..., Pn aufweisen (n ist die Gesamtanzahl der Anschlussports). Jeder Anschlussport kann hierbei gleichzeitig als Empfangsport Ingress und als Ausgangsport Egress betrieben werden. Aus diesem Grund sind in der Figur die Anschlussports P1, P2, P3, ..., Pn zweimal repräsentiert: So weist der Anschlussport P1 also einen Empfangsteil P1i und einen Ausgangsteil oder Sendeteil P1o auf. Entsprechendes ist für die anderen Anschlussports P2, P3, ..., Pn veranschaulicht. Jeder Empfangsteil stellt einen Eingangsport P1i, P2i, P3i, ..., Pni, jeder Sendeteil einen Ausgangsport P1o, P2o, P3o, ..., Pno dar.

Jedes der Steuergeräte 11 kann über ein Netzwerkzweig 13 an einen der Anschlussports P1, P2, ..., Pn angeschlossen sein. In der Figur ist beispielhaft veranschaulicht, wie das Steuergerät ECU1 an den Anschlussport P1, das Steuergerät ECU2 an den Anschlussport P2 und das Steuergerät ECUn an den Anschlussport Pn angeschlossen sein kann.

An zumindest einen Anschlussport (hier z.B. P3) kann beispielhaft eine weitere Switchvorrichtung 14 angeschlossen sein. Die Anschlussports P1, P2, P3, ..., Pn können über eine Switch-Matrix oder Schaltmatrix 15 der Switchvorrichtung 14 in an sich bekannter Weise gekoppelt sein.

Durch die Switchvorrichtung 14 können aus den Steuergeräten 11 und/oder aus zumindest einer weiteren angeschlossenen Switchvorrichtung 14 jeweils Nachrichten 16 empfangen werden. Jede Nachricht 16 kann Nutzdaten 17 und eine Angabe einer Zieladresse 18 und einer Prioritätsstufe 19 enthalten.

Durch die Switchvorrichtung 14 wird ein zeitlicher Determinismus sichergestellt, sodass eine maximale zeitliche Verzögerung der Nachrichten in Abhängigkeit von der jeweiligen Prioritätsstufe 19 der Nachricht 16 begrenzt oder festgelegt ist. Diese Sicherstellung des Determinismus der Kommunikationsbeziehungen der Steuergeräte 11 untereinander geschieht auch ohne dass die Steuergeräte 11 ihre Nachrichten 16 in dem Datennetzwerk 12 nach vorbestimmten einem Gesamtfahrzeug-Ablaufplan austauschen.

Es entsteht hierdurch eine Flexibilität in der Datenkommunikation, indem Steuergeräte 11 ausgewechselt oder entfernt oder neue Steuergeräte 11 hinzugefügt werden können, ohne dass hierbei der Determinismus in Bezug auf die zeitliche Verzögerung für Nachrichten 16 zumindest mit der höchsten Prioritätsstufe 19 verloren geht.

Hierzu bietet die Switchvorrichtung 14 die Möglichkeit, über die Angabe einer Prioritätsstufe 19 in einer Nachricht 16 den Datenverkehr z.B. in einem Ethernet-Netzwerk zu strukturieren. Die Wahl der Prioritätsstufen 19 für Nachrichten 16 unterschiedlicher Nachrichtentypen ermöglicht in Kombination mit der Beschränkung der Datenrate für eintreffende Nachrichten 16 gegebener Prioritätsstufe 19 insgesamt die Sicherstellung des zeitlichen Determinismus.

An den Eingangsports P1i, P2i, P3i, ..., Pni (Ingress-Ports) werden hierzu die eingehenden Nachrichten 16 über die Datenrate für jede Prioritätsstufe 19 begrenzt. An den Ausgangsports P1o, P2o, P3o, ..., Pno (Egress-Ports) werden die Nachrichten 16, die von der Switchvorrichtung 14 angenommen oder weitergeleitet wurden, in der Reihenfolge ihrer Priorität gemäß der Prioritätsstufe 19 versendet.

Somit müssen also durch die Steuergeräte 16 die Nachrichten 16 entsprechend ihren Kommunikationsanforderungen nur durch Angabe der Prioritätsstufe 19 priorisiert werden. Alle Switches 14 können derart konfiguriert sein, sodass sie nicht mehr eingehende Kommunikation erlauben, als festgelegt ist. Mit anderen Worten wird an jedem Eingangsport oder Ingress-Port nur eine Höchstdatenmenge pro Zeiteinheit und pro Prioritätsstufe durch die jeweilige Switchvorrichtung 14 akzeptiert. An den in Eingangsports wird also die Datenrate von eingehenden Nachrichten 16 begrenzt, indem pro Eingangsport und Prioritätsstufe zum Beispiel eine maximal erlaubte Datenmenge pro Zeitfenster oder eine maximal erlaubte Nachrichtenanzahl pro Zeitfenster festgelegt wird. An den Ausgangsports oder Egress-Ports werden dann die akzeptierten oder aufgenommenen Nachrichten entsprechend ihrer Prioritätsstufe versendet.

Sind in dem Kraftfahrzeug 10 sämtliche Nachrichten statisch festgelegt, also der Worst-Case der Anzahl der zu übertragenden Nachrichten bekannt, kann durch die Kombination aus Begrenzung der Höchstdatenmenge an den Eingangsports und durch die Priorisierung an den Ausgangsports für jede Nachricht 16 die maximale Verzögerung in der Switchvorrichtung 14 berechnet werden. Unter Berücksichtigung der Topologie oder Verbindungsstruktur der Netzwerkzweige 13 im Datennetzwerk 12 kann dies darauf aufbauend für die gesamte Verbindungsroute oder Kommunikationsverbindung zweier Steuergeräte 11 ermittelt und somit prädiziert oder sichergestellt werden.

Eine Zeitsynchronisation von Steuergeräten ist hierbei nicht zwingend notwendig, kann aber eine garantierte Übertragungslatenz zusätzlich verringern. Dies kann durch Vermeidung von Kollision aufgrund zweier gleichzeitig gesendeter Nachrichten erfolgen, indem synchronisierte Steuergeräte 11 ihre Nachrichten 16 zeitversetzt zueinander aussenden. Nachrichten zumindest der niedrigsten Prioritätsstufe können von jedem Steuergerät 11 in beliebig großer Anzahl ausgesendet werden, ohne dass dies Nachrichten höherer Prioritätsstufen blockieren würde.

Insgesamt zeigt das Beispiel, wie durch die Erfindung in einem Datennetzwerk eines Kraftfahrzeugs ein zeitlicher Determinismus durch Prioritäten sichergestellt werden kann.

## Patentansprüche

1. Verfahren zum Übertragen von Nachrichten (16) zwischen Steuergeräten (11) eines Kraftfahrzeugs (10) mittels einer Switchvorrichtung (14), wobei an Eingangsports (P1i,...,Pni) der Switchvorrichtung (14) die Nachrichten (16) der Steuergeräte (11) eintreffen und wobei jede der Nachrichten (16) eine Angabe einer Zieladresse (18) und eine Angabe zu einer Prioritätsstufe (19) aus mehreren vorbestimmten Prioritätsstufen enthält, wobei
durch die Switchvorrichtung (14) pro Eingangsport (P1i,...,Pni) jeweils für eine oder einige oder alle der Prioritätstufen (19) und pro vorbestimmter Zeiteinheit höchstens Nachrichten (16) mit insgesamt einer vorbestimmte Höchstdatenmenge aufgenommen werden und die aufgenommenen Nachrichten (16) jeweils in Abhängigkeit von ihrer Zieladresse (18) einem Ausgangsport (P1o,...,Pno) zugeordnet werden und an jedem Ausgangsport (P1o,...,Pno) die diesem zugeordneten Nachrichten (16) ausgesendet werden,
wobei zumindest zwei der Steuergeräte (11) untereinander eine Zeitsynchronisation von jeweiligen Zeitgebern der Steuergeräte (11) durchführen und die synchronisierten Steuergeräte (11) ihre Nachrichten (16) zeitversetzt zueinander aussenden, wodurch ein Sendeverhalten der synchronisierten Steuergeräte (11) verschränkt ist, sodass an der Switchvorrichtung (14) abwechselnd die Nachrichten der synchronisierten Steuergeräte (11) kollisionsfrei eintreffen,
**dadurch gekennzeichnet, dass**
in den Nachrichten (16) die jeweilige Prioritätsstufe (19) durch kryptographisch verschlüsselte Prioritätsdaten angegeben ist und durch die Switchvorrichtung (14) die Prioritätsdaten mittels eines kryptographischen Schlüssels entschlüsselt werden und/oder wobei die Switchvorrichtung (14) eine kryptographisch abgesicherte, interne Konfiguration aufweist.

2. Verfahren nach Anspruch 1, wobei an jedem Eingangsport (P1i,...,Pni) für die Prioritätsstufen (19) eine Nachrichtenanzahl ermittelt wird und die Anzahl der Nachrichten (16) pro Zeiteinheit begrenzt wird.

3. Verfahren nach einem der vorhergehenden Ansprüche, wobei an den Ausgangsports (Po1,...,Pno) die zugeordneten Nachrichten (16) in der Reihenfolge ihrer Prioritätsstufen (19) ausgesendet werden.

4. Verfahren nach einem der vorhergehenden Ansprüche, wobei für zumindest eine Prioritätsstufe (19) ein Maximalwert einer Übertragungsverzögerung vorgegeben ist und die Höchstdatenmenge in Abhängigkeit von dem Maximalwert festgelegt wird.

5. Verfahren nach einem der vorhergehenden Ansprüche, wobei die Nachrichten (16) zumindest eines der beiden synchronisierten Steuergeräte (11) ein Breitbandsignal darstellen, dessen Datenrate mindestens 10 Prozent einer Netto-Datenrate des Datennetzwerks beträgt.

6. Verfahren nach einem der vorhergehenden Ansprüche, wobei die Steuergeräte (11) ihre Nachrichten (16) unabhängig von einem globalen Sendeplan aussenden und hierbei eine vorgegebene Zeitschranke für die jeweilige Übertragungszeit der Nachrichten sichergestellt ist.

7. Switchvorrichtung (14) für ein Kraftfahrzeug (10), wobei die Switchvorrichtung (14) Anschlussports (P1,...,Pn) zum Anschließen von Netzwerkzweigen (13) eines Datennetzwerks (12) aufweist und zumindest einige der Anschlussports (P1,...,Pn) für einen Betrieb als Empfangsports (P1i,...,Pni) und zumindest einige der Anschlussports (P1,...,Pn) für einen Betrieb als Ausgangsports (P1o,...Pno) eingerichtet sind,
**dadurch gekennzeichnet, dass**
die Switchvorrichtung (14) eine Prozessoreinrichtung aufweist, die dazu eingerichtet ist, die die Switchvorrichtung (14) betreffenden Schritte eines Verfahrens nach einem der Ansprüche 1 bis 4 durchzuführen.

8. Kraftfahrzeug (10) mit zumindest einer Switchvorrichtung (14), über welche Steuergeräte (11) zum Austauschen von Nachrichten (16) gekoppelt sind,
**dadurch gekennzeichnet, dass**
die zumindest eine Switchvorrichtung (14) jeweils gemäß Anspruch 7 ausgestaltet ist und/oder dass die Steuergeräte (11) dazu eingerichtet sind, die die Steuergeräte (11) betreffenden Verfahrensschritte gemäß zumindest einem der Ansprüche 1 oder 5 oder 6 durchzuführen.

## Claims

1. Method for transmitting messages (16) between control devices (11) of a motor vehicle (10) by means of a switch device (14), wherein the messages (16) of the control devices (11) arrive at input ports (P1i,...,Pni) of the switch device (14) and wherein each of the messages (16) contains a statement of a destination address (18) and a statement regarding a priority degree (19) from several predetermined priority degrees, wherein
the switch device (14) records, per input port (P1i,...,Pni), in each case for one or some or all of the priority degrees (19) and per predetermined unit of time, at most messages (16) with a predetermined maximum data length in total and assigns the recorded messages (16) to an output port (P1o,...,Pno) on the basis of their respective destination address (18) and for each output port (P1o,...,Pno) transmits the messages (16) associated therewith,
wherein at least two of the control devices (11) carry out a time synchronisation of respective timers of the control devices (11) between one another and the synchronised control devices (11) transmit their messages (16) with a time offset between them, as a result of which a transmission behaviour of the synchronised control devices (11) is interlaced, such that the messages of the synchronised control devices (11) arrive alternately, free of any collision, at the switch device (14),
**characterised in that**
in the messages (16) the respective priority degree (19) is stated by means of cryptographically encoded priority data and the priority data are decoded by the switch device (14) by means of a cryptographic key and/or wherein the switch device (14) has a cryptographically protected, internal configuration.

2. Method according to claim 1, wherein at each input port (P1i,...,Pni) a number of messages is established for the priority degrees (19) and the number of messages (16) per unit of time is limited.

3. Method according to any one of the preceding claims, wherein at the output ports (Po1,...,Pno) the assigned messages (16) are transmitted in the order of their priority degrees (19).

4. Method according to any one of the preceding claims, wherein for at least one priority degree (19) a maximum value of a transmission delay is preset and the maximum data quantity is set depending on the maximum value.

5. Method according to any one of the preceding claims, wherein the messages (16) of at least one of the two synchronised control devices (11) represent a broadband signal, the data rate of which is at least 10 per cent of a net data rate of the data network.

6. Method according to any one of the preceding claims, wherein the control devices (11) transmit their messages (16) independently of a global transmission plan and in this connection a preset time limit for the respective transmission period of the messages is ensured.

7. Switch device (14) for a motor vehicle (10), wherein the switch device (14) has connection ports (P1,...,Pn) for the connection of network branches (13) of a data network (12) and at least some of the connection ports (P1,...,Pn) are configured for operation as receiving ports (P1i,...,Pni) and at least some of the connection ports (P1,...,Pn) are configured for operation as output ports (P1o,...Pno),
**characterised in that**
the switch device (14) has a processor device, which is configured to carry out the steps of a method affecting the switch device (14) according to any one of claims 1 to 4.

8. Motor vehicle (10) with at least one switch device (14), by way of which control devices (11) are coupled to exchange messages (16),
**characterised in that**
the at least one switch device (14) is designed respectively according to claim 7 and/or that the control devices (11) are configured to carry out the method steps affecting the control devices (11) according to at least one of claims 1 or 5 or 6.

## Revendications

1. Procédé de transmission de messages (16) entre des appareils de commande (11) d'un véhicule automobile (10) au moyen d'un dispositif de commutation (14), dans lequel les messages (16) des appareils de commande (11) arrivent à des ports d'entrée (P1i,...,Pni) du dispositif de commutation (14) et dans lequel chacun des messages (16) contient une indication d'une adresse de destination (18) et une indication d'un niveau de priorité (19) parmi plusieurs niveaux de priorité prédéterminés, dans lequel
le dispositif de commutation (14) reçoit, par port d'entrée (P1i,...,Pni) à chaque fois pour un ou quelques ou tous les niveaux de priorité (19) et par unité de temps prédéterminée, au maximum des messages (16) avec au total une quantité de données maximale prédéterminée et les messages reçus (16) sont associés à chaque fois en fonction de leur adresse de destination (18) à un port de sortie (P1o,...,Pno) et, à chaque port de sortie (P1o, .... Pno), les messages (16) associés à celui-ci sont émis,
dans lequel au moins deux des appareils de commande (11) effectuent entre eux une synchronisation temporelle d'horloges respectives des appareils de commande (11) et les appareils de commande (11) synchronisés émettent leurs messages (16) avec un décalage temporel les uns par rapport aux autres, de sorte qu'un comportement d'émission des appareils de commande (11) synchronisés est entrelacé de telle sorte que les messages des appareils de commande (11) synchronisés arrivent sans collision et en alternance au dispositif de commutation (14),
**caractérisé en ce que**,
dans les messages (16), le niveau de priorité (19) respectif est indiqué par des données de priorité codées de manière cryptographique et les données de priorité sont décodées par le dispositif de commutation (14) au moyen d'une clé cryptographique et/ou le dispositif de commutation (14) présente une configuration interne protégée par cryptographie.

2. Procédé selon la revendication 1, dans lequel, à chaque port d'entrée (P1i,...,Pni), un nombre de messages est déterminé pour les niveaux de priorité (19) et le nombre des messages (16) par unité de temps est limité.

3. Procédé selon l'une quelconque des revendications précédentes, dans lequel, aux ports de sortie (Po1,...,Pno), les messages (16) associés sont émis dans l'ordre de leurs niveaux de priorité (19).

4. Procédé selon l'une quelconque des revendications précédentes, dans lequel, pour au moins un niveau de priorité (19), une valeur maximale d'un retard de transmission est prédéterminée et la quantité de données maximale est fixée en fonction de la valeur maximale.

5. Procédé selon l'une quelconque des revendications précédentes, dans lequel les messages (16) d'au moins un des deux appareils de commande (11) synchronisés représentent un signal à large bande dont le débit est égal à au moins 10 pour cent d'un débit net du réseau de données.

6. Procédé selon l'une quelconque des revendications précédentes, dans lequel les appareils de commande (11) émettent leurs messages (16) en fonction d'un plan d'émission global et une limite temporelle prédéterminée pour le temps de transmission respectif des messages est ainsi garantie.

7. Dispositif de commutation (14) pour un véhicule automobile (10), dans lequel le dispositif de commutation (14) présente des ports de connexion (P1,...,Pn) pour connecter des branches de réseau (13) d'un réseau de données (12) et au moins quelques-uns des ports de connexion (P1,...,Pn) sont conçus pour un fonctionnement comme ports de réception (P1i,...,Pni) et au moins quelques-uns des ports de connexion (P1,...,Pn) sont conçus pour un fonctionnement comme ports de sortie (P1o,...,Pno),
**caractérisé en ce que**
le dispositif de commutation (14) présente un dispositif processeur qui est conçu pour mettre en œuvre les étapes, concernant le dispositif de commutation (14), d'un procédé selon l'une quelconque des revendications 1 à 4.

8. Véhicule automobile (10) avec au moins un dispositif de commutation (14), par l'intermédiaire duquel des appareils de commande (11) sont couplés en vue de l'échange de messages (16),
**caractérisé en ce que**
l'au moins un dispositif de commutation (14) est réalisé à chaque fois selon la revendication 7 et/ou **en ce que** les appareils de commande (11) sont conçus pour mettre en œuvre les étapes de procédé, concernant les appareils de commande (11), selon au moins l'une des revendications 1 ou 5 ou 6.
